# DEMANDE DE BREVET EUROPEEN

(11) **EP 1 653 134 A1**
(43) Date de publication de la demande: **03.05.2006**
(21) Numéro de dépôt: 05292233.3
(22) Date de dépôt: 24.10.2005
(51) Int. Cl.: F16K 31/06, F16K 27/02

(54) **Electrovanne de contrôle de l'écoulement d'un fluide**

(30) Priorité: 28.10.2004 FR 0411502
(71) Demandeur: Era Sib (SAS), 95100 Argenteuil (FR)
(72) Inventeur: Da Silva, Almiro, 78440 Brueil En Vexin (FR); Lahoche, Frédéric, 93150 Le Blanc Mesnil (FR)
(74) Mandataire: Chambon, Gérard

(57) **Abrégé**

L'invention concerne une électrovanne de contrôle de l'écoulement d'un fluide, comportant une bobine (1) munie d'un enroulement (2) de fil conducteur, d'une carcasse (3) dans laquelle est monté un noyau mobile (5) et d'un moyen pour se raccorder de manière coaxiale à un corps cylindrique (9) creux pourvu d'au moins un raccord d'entrée (11) et d'au moins un raccord de sortie (10) du fluide, dont l'un (10) des raccords est disposé de manière sensiblement coaxiale audit corps (9), tandis qu'une soupape aménagée entre lesdits raccords (10,11) présente un clapet (8) qui est actionné par ledit noyau mobile (5), et un siège (12) fixé ou solidaire du raccord coaxial (10).

L'électrovanne selon l'invention est notamment remarquable en ce que le moyen de raccordement de la bobine (1) et le raccord (10) de fluide, coaxial au corps (9), comportent chacun au moins deux ergots (14,16) destinés à coopérer avec au moins deux logements (15,17) conjugués qui sont aménagés à l'extrémité correspondante du corps afin de constituer une fixation amovible, tandis qu'un moyen de déverrouillage (19) est prévu autour du corps (9) pour solliciter lesdits ergots de fixation de la bobine et/ou du raccord coaxial vers une position de déverrouillage.

## Description

L'invention concerne une électrovanne de contrôle de l'écoulement d'un fluide, en particulier pour équiper un distributeur de boissons.

Il est connu de concevoir des électrovannes du type comportant une bobine munie d'un enroulement de fil conducteur, d'une carcasse dans laquelle est monté un noyau mobile et d'un moyen pour se raccorder de manière coaxiale à un corps cylindrique creux pourvu d'au moins un raccord d'entrée et d'au moins un raccord de sortie du fluide, dont l'un des raccords est disposé de manière sensiblement coaxiale audit corps, tandis qu'une soupape aménagée entre lesdits raccords présente un clapet qui est actionné par ledit noyau mobile, et un siège fixé ou solidaire du raccord coaxial.

En vue d'équiper notamment les distributeurs de boissons, une vanne du type précité peut ne comporter qu'un raccord d'entrée et un raccord de sortie, ce dernier étant généralement dans ce cas le raccord coaxial, tandis que le raccord d'entrée est disposé de manière sensiblement perpendiculaire audit raccord coaxial.

Dans l'art connu, la fixation de la bobine au corps s'effectue généralement au moyen d'une pièce rapportée, par exemple vissée, laquelle est, par exemple, maintenue à la bobine au moyen d'un fourreau tubulaire disposé dans l'alésage central de la carcasse de la bobine et dans lequel se déplace le noyau mobile, ledit fourreau tubulaire étant lui-même fixé par vissage par exemple.

Dans tous les cas le nombre de pièces est important et le montage-démontage peu aisé.

C'est pourquoi l'invention propose une électrovanne dont le nombre de pièces est réduit et dont le montage-démontage est aisé, d'où un bénéfice en coût de fabrication et de maintenance.

A cet effet, l'invention propose une électrovanne du type précité au début mais qui est remarquable en ce que le moyen de raccordement de la bobine et le raccord de fluide, coaxial au corps, comportent chacun au moins deux ergots destinés à coopérer avec au moins deux logements conjugués qui sont aménagés à l'extrémité correspondante du corps afin de constituer une fixation amovible, tandis qu'un moyen de déverrouillage est prévu autour du corps pour solliciter lesdits ergots de fixation de la bobine et/ou du raccord coaxial vers une position de déverrouillage.

Avantageusement, le corps présente plus de logements que le moyen de raccordement de la bobine et/ou le raccord coaxial ne comportent d'ergots conjugués, de manière à obtenir plusieurs positions angulaires possibles de fixation.

Selon un mode de réalisation, les ergots de fixation se présentent sous la forme de crochets élastiques et les moyens conjugués du corps sous la forme d'ajours dans lesquels lesdits crochets viennent s'accrocher, tandis que le moyen de déverrouillage se présente sous la forme d'un manchon coulissant autour du corps, une zone de la paroi interne dudit manchon pouvant ainsi solliciter lesdits crochets vers l'intérieur pour les décrocher des ajours.

De préférence, les ajours du corps sont ménagés dans des rainures formées dans l'épaisseur dudit corps tandis que le manchon est pourvu de bossages conjugués légèrement plus courts que lesdites rainures et destinés à venir se loger dans ces dernières de telle sorte que les crochets sont en position de verrouillage lorsque le manchon est en position intermédiaire, et ils sont déverrouillés lors d'un coulissement dudit manchon dans un sens ou dans l'autre.

Par exemple, le manchon présente une découpe longitudinale pour notamment laisser le passage du ou des raccords non coaxiaux.

Le corps peut en outre présenter une nervure ou une rainure longitudinale sur sa paroi extérieure et le manchon une rainure ou respectivement une nervure de forme complémentaire sur sa paroi intérieure, de manière à assurer un maintien temporaire en position intermédiaire du manchon sur le corps et/ou un retour de celui-ci vers cette position intermédiaire par élasticité.

Selon un mode de réalisation, le moyen de raccordement de la bobine est constitué par un prolongement de la carcasse de ladite bobine tandis que le noyau mobile coulisse directement dans l'alésage central de ladite carcasse sans pièce intermédiaire.

Par exemple aussi, la carcasse et l'enroulement du fil conducteur de la bobine sont entièrement enrobés par une matière surmoulée qui ne laisse dépasser que le prolongement de ladite carcasse.

L'invention sera bien comprise à la lecture de la description qui va suivre et qui se réfère aux dessins annexés dans lesquels :
- la figure 1 est une vue éclatée d'une électrovanne selon l'invention,
- la figure 2 est une vue de dessus de l'électrovanne,
- la figure 3 est une coupe selon III-III de la figure 2,
- la figure 4 est une coupe selon IV-IV de la figure 2,
- la figure 5 est un détail selon V de la figure 4.

L'électrovanne selon l'invention représentée sur les dessins est donnée à titre d'exemple et constitue ici une électrovanne pour distributeur de boissons. Cette électrovanne est destinée à contrôler l'écoulement d'un fluide tel que de l'eau par exemple.

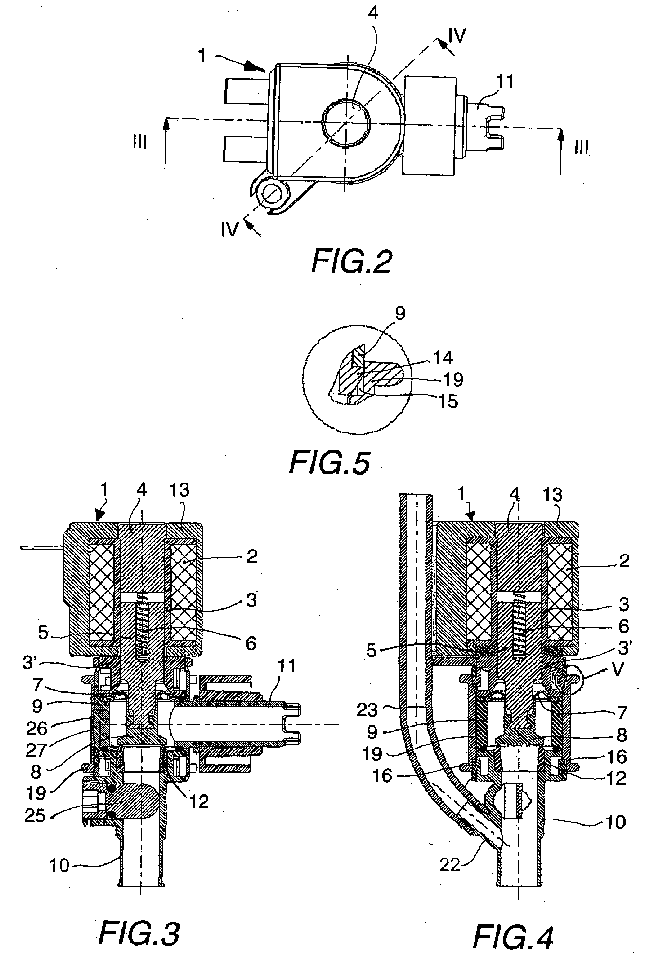

L'électrovanne représentée comporte classiquement une bobine 1 à solénoïde constituée par un enroulement 2 de fil conducteur autour d'une carcasse 3 (figures 3 et 4) cylindrique et tubulaire.

Dans l'alésage central de la carcasse 3, est disposé un noyau fixe 4 constituant une masse polaire et un noyau mobile 5 d'actionnement qui est sollicité par un ressort 6 à faire saillie de ladite carcasse 3 tandis que la bobine peut agir par son champ magnétique sur ledit noyau à l'encontre de l'effet du ressort 6.

L'extrémité du noyau mobile 5 est pourvue d'une membrane 7 et d'un clapet 8 formés ici d'une seule pièce et dont la fonction sera décrite ci-après.

La bobine 1 est fixée à un corps cylindrique 9 tubulaire dans lequel se déplace le noyau mobile 5.

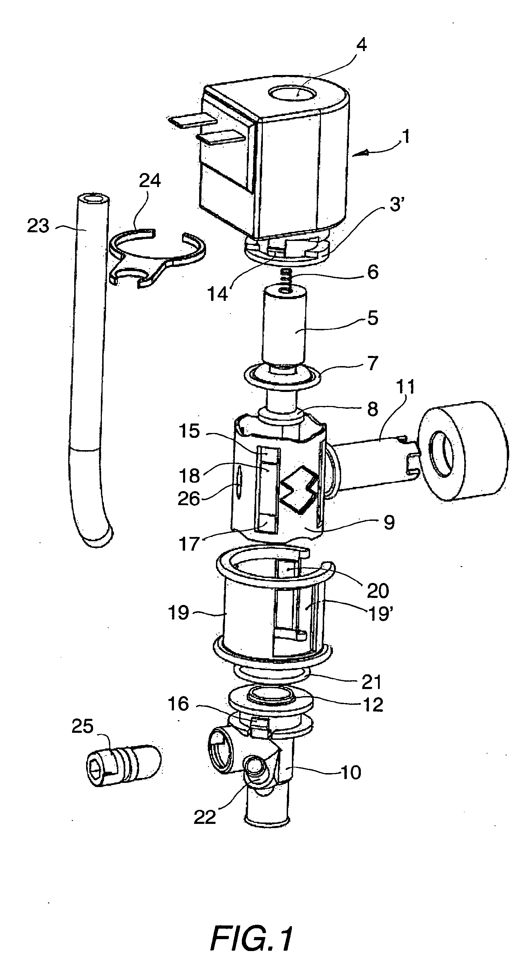

Axialement au corps 9 est fixé un raccord constituant ici un raccord de sortie 10 de fluide (figures 1, 3 et 4), tandis qu'un raccord d'entrée 11 de fluide qui est dans cet exemple solidaire du corps 9, est disposé perpendiculairement à l'axe dudit corps 9 (figures 1 et 4).

Le raccord de sortie 10 est pourvu d'un siège 12 destiné à constituer avec le clapet 8 précité une soupape d'ouverture et de fermeture disposée entre les raccords d'entrée 11 et de sortie 10, l'étanchéité et l'isolement du fluide par rapport à la bobine 1 et le noyau mobile 4 étant assurés par la membrane 7 qui est, comme déjà dit, d'une seule pièce avec le clapet 8.

Comme le montrent bien les figures 3 et 4, l'enroulement 2 du fil conducteur et la carcasse 3 qui lui sert de support sont avantageusement ici enrobés par surmoulage par une matière isolante 13.

On constate aussi que, contrairement à l'art connu, le noyau mobile 5 coulisse directement dans la carcasse 3 sans pièce intermédiaire, ladite carcasse présentant ici de manière originale un prolongement 3' (figures 1, 3 et 4) qui fait saillie de la matière 13 d'enrobage et qui sert à la fixation de la bobine sur le corps comme il sera expliqué ci-après.

Pour la fixation de la bobine 1, l'invention prévoit d'équiper le prolongement 3' de la carcasse 3 d'ergots élastiques, ici sous la forme de crochets tels que 14, comme représenté sur le détail de la figure 5 ou sur la figure 1, les crochets 14 étant ici au nombre de deux et diamétralement opposés.

Les crochets 14 sont destinés à coopérer avec des logements correspondants du corps sous la forme ici d'ajours tels que 15 (figures 1 et 5).

Les ajours 15 peuvent être par exemple au nombre de quatre, régulièrement répartis de manière à offrir deux positions angulaires possibles à 90° l'une de l'autre, de la bobine relativement au corps.

De manière symétrique, le raccord de sortie 10 présente sous le siège 12 également des crochets 16 (figures 1 et 4), ici du même type que les crochets 14 du prolongement 3'.

Les crochets 16 du raccord 11 coopèrent avec des ajours 17 du corps 3 du même type que les ajours 15 précités.

Comme pour la bobine 1, deux crochets 16 et quatre ajours 17 permettent d'assurer deux positions angulaires distinctes pour le raccord de sortie 10 relativement audit corps.

Dans cet exemple, les ajours 15 et 16 sont ménagés sur le corps 3 dans des rainures 18 creusées dans l'épaisseur du corps 3, comme le montre bien la figure 1.

L'invention prévoit en outre un moyen de verrouillage qui permet de séparer aisément le corps de la bobine 1 et/ou le corps du raccord 10.

A cet effet, l'invention prévoit un manchon 19 (figures 1, 3 et 4) qui vient entourer le corps 3.

Le manchon 19 est en partie ouvert comme le montre en 19' la figure 1, en particulier pour permettre le passage du raccord d'entrée 11 (il est en outre ici ajouré comme le montre ladite figure 1).

Le manchon 19 est monté coulissant sur le corps 3 et présente des bossages 20 dont la forme est complémentaire de celle des rainures 18 du corps 3, mais légèrement plus courts.

Les bossages 20 viennent ainsi se loger et coulisser dans lesdites rainures 18 ce qui assure son guidage.

Du fait que les bossages 20 sont légèrement plus courts que les rainures 18, en position intermédiaire du manchon 19, le prolongement 3' et le raccord 10 sont bien verrouillés par leurs crochets alors qu'en fin de course de translation du manchon 19 vers la bobine 1 ou vers le raccord 10, les bossages 20 viennent solliciter les crochets 14 et respectivement 16, à l'encontre de leur force de rappel élastique vers une position de déverrouillage.

Le mode de réalisation décrit présente des avantages certains quant à la simplification de l'électrovanne du fait de la réduction du nombre de pièces, à la facilité de montage et de démontage sans outils particuliers, et au réglage en position relative des pièces entre elles.

Par ailleurs, des moyens complémentaires sont évidemment prévus comme des joints d'étanchéité tels que le joint 21 (figure 1), un raccord d'évent 22 muni d'un tuyau 23 maintenu par un clip 24 (figure 1) ou encore une vis de réglage 25 de débit.

Des moyens complémentaires propres à l'invention peuvent aussi être prévus comme par exemple une nervure longitudinale 26 aménagée sur la paroi extérieure du corps (figures 1 et 3), destinée à coopérer avec une rainure (27) de forme conjuguée prévue sur la paroi intérieure du manchon 19 (figure 3) afin de maintenir temporairement en position intermédiaire ledit manchon sur le corps et/ou d'assurer le retour dudit manchon vers cette position intermédiaire par élasticité. On comprend aussi que la nervure pourrait être aménagée sur le manchon et la rainure respectivement sur le corps.

En outre, on comprend que le raccord d'entrée pourrait être le raccord coaxial 10 et le raccord de sortie, le raccord perpendiculaire 11.

De même le raccord 11 pourrait être disposé obliquement et il pourrait y avoir aussi plusieurs raccord d'entrée et/ou de sortie.

## Revendications

1. Electrovanne de contrôle de l'écoulement d'un fluide, comportant une bobine (1) munie d'un enroulement (2) de fil conducteur, d'une carcasse (3) dans laquelle est monté un noyau mobile (5) et d'un moyen pour se raccorder de manière coaxiale à un corps cylindrique (9) creux pourvu d'au moins un raccord d'entrée (11) et d'au moins un raccord de sortie (10) du fluide, dont l'un (10) des raccords est disposé de manière sensiblement coaxiale audit corps (9), tandis qu'une soupape aménagée entre lesdits raccords (10,11) présente un clapet (8) qui est actionné par ledit noyau mobile (5), et un siège (12) fixé ou solidaire du raccord coaxial (10), ***caractérisée* en ce que** le moyen de raccordement de la bobine (1) et le raccord (10) de fluide, coaxial au corps (9), comportent chacun au moins deux ergots (14,16) destinés à coopérer avec au moins deux logements (15,17) conjugués qui sont aménagés à l'extrémité correspondante du corps afin de constituer une fixation amovible, tandis qu'un moyen de déverrouillage (19) est prévu autour du corps (9) pour solliciter lesdits ergots de fixation de la bobine et/ou du raccord coaxial vers une position de déverrouillage.

2. Electrovanne selon la revendication 1, ***caractérisée* en ce que** le corps (9) présente plus de logements (15,17) que le moyen de raccordement de la bobine et/ou le raccord coaxial ne comportent d'ergots (14,16) conjugués, de manière à obtenir plusieurs positions angulaires possibles de fixation.

3. Electrovanne selon l'une des revendications 1 et 2, ***caractérisée* en ce que** les ergots de fixation se présentent sous la forme de crochets (14,16) élastiques et les moyens conjugués du corps sous la forme d'ajours (15,17) dans lesquels lesdits crochets viennent s'accrocher, tandis que le moyen de déverrouillage se présente sous la forme d'un manchon (19) coulissant autour du corps (9), une zone de la paroi interne dudit manchon pouvant ainsi solliciter lesdits crochets (14,16) vers l'intérieur pour les décrocher des ajours (15,17).

4. Electrovanne selon la revendication 3, **caractérisée en ce que** les ajours (15,17) du corps (9) sont ménagés dans des rainures (18) formées dans l'épaisseur dudit corps tandis que le manchon (19) est pourvu de bossages (20) conjugués légèrement plus courts que lesdites rainures et destinés à venir se loger dans ces dernières de telle sorte que les crochets sont en position de verrouillage lorsque le manchon (19) est en position intermédiaire, et ils sont déverrouillés lors d'un coulissement dudit manchon dans un sens ou dans l'autre.

5. Electrovanne selon l'une des revendications 3 et 4, ***caractérisée* en ce que** le manchon présente une découpe longitudinale (19') pour notamment laisser le passage du ou des raccords (11) non coaxiaux.

6. Electrovanne selon l'une des revendications 3 à 5, ***caractérisée* en ce que** le corps (9) présente une nervure (26) ou une rainure longitudinale sur sa paroi extérieure et le manchon (19) une rainure (27) ou respectivement une nervure de forme complémentaire sur sa paroi intérieure, de manière à assurer un maintien temporaire en position intermédiaire du manchon (19) sur le corps (9) et/ou un retour de celui-ci vers cette position intermédiaire par élasticité.

7. Electrovanne selon l'une des revendications 1 à 6, ***caractérisée* en ce que** le moyen de raccordement de la bobine (1) est constitué par un prolongement (3') de la carcasse (3) de la bobine (1) tandis que le noyau mobile (5) coulisse directement dans l'alésage central de ladite carcasse (3) sans pièce intermédiaire.

8. Electrovanne selon la revendication 7, **caractérisée en ce que** la carcasse (3) et l'enroulement (2) du fil conducteur de la bobine (1) sont entièrement enrobés par une matière (13) surmoulée qui ne laisse dépasser que le prolongement (3') de ladite carcasse (3).
